(19) Europäisches Patentamt
European Patent Office
Office européen des brevets

(11) **EP 4 194 230 B1**

(12) **EUROPEAN PATENT SPECIFICATION**

(45) Date of publication and mention
of the grant of the patent:
**20.11.2024  Bulletin 2024/47**

(21) Application number: **21214025.5**

(22) Date of filing: **13.12.2021**

(51) International Patent Classification (IPC):
**B60C 11/24** *(2006.01)*       **B60C 23/04** *(2006.01)*

(52) Cooperative Patent Classification (CPC):
**B60C 11/246; B60C 11/243; B60C 23/0405;
B60C 23/0406**

(54) **APPARATUS AND METHODS FOR CALCULATING AND/OR MONITORING A TIRE WEAR RATE OF A VEHICLE**

VORRICHTUNG UND VERFAHREN ZUR BERECHNUNG UND/ODER ÜBERWACHUNG DER REIFENABNUTZUNGSRATE EINES FAHRZEUGS

APPAREIL ET PROCÉDÉS POUR CALCULER ET/OU SURVEILLER LE TAUX D'USURE DES PNEUS D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.06.2023  Bulletin 2023/24**

(73) Proprietor: **Bridgestone Europe NV/SA
1930 Zaventem (BE)**

(72) Inventors:
• **Bortolotto, Valerio
  00128 Roma (IT)**
• **Pascucci, Marco
  00128 Roma (IT)**
• **Alleva, Lorenzo
  00128 Rome (IT)**

(74) Representative: **Marchetti, Alessio
  Bridgestone Europe N.V./S.A. - Italian Branch
  Technical Center
  Via del Fosso del Salceto, 13/15
  00128 Roma (IT)**

(56) References cited:
**EP-A1- 3 318 422       DE-A1- 102021 101 595
US-A1- 2018 272 813   US-A1- 2020 334 922**

**Description**

TECHNICAL FIELD

FIELD OF INVENTION

This invention is generally directed to computer-implemented methods and apparatus for calculating and/or monitoring a tire wear rate of a vehicle.

BACKGROUND

Tire wear rate is an essential factor contributing to road safety. Changing tires not early enough may lead to dangerous traffic situations or even accidents, which may lead to serious injuries or deaths as well as high financial liability risks. Being able to change tires just at the right time therefore is not only a question of safety but also a question of economy. Missing the right point in time to change the tires may result in high cost due to potential accidents or damages, taking the change too early may lead to additional fleet costs. A proper tire lifecycle management is also a matter of sustainability since changing tires too early may lead to waste of valuable resources.

Determining the right point in time to change tires is also an important success factor in vehicle logistics or fleet management. By being able to schedule changing tires of a vehicle right in time or scheduling changing tires in combination with maintenance of other components of a vehicle, non-operation periods can be kept as short as possible, resulting in cost savings and increased reliability especially in view of commercial applications. For example, when changing tires, other components of a vehicle having only a short remaining lifetime may be replaced as well. In particular, when managing fleets comprising multiple long-haul trucks, monitoring the wear rate of the tires properly is important to e.g., decide which truck among the available trucks is suited best for a particular route.

Therefore, the ability to make a precise prediction of the right point in time to change tires is a key factor in order to render mobility and transport of goods safer, greener, more reliable as well as more cost-efficient.

Conventional methods for monitoring the tire wear rate by estimating the tire wear are either based on purely static mathematical models or on costly dedicated sensors in the tire, or a combination thereof. The use of purely static mathematical models leads to a lack of accuracy and therefore results in missing the goal of exactly predicting the right point in time for changing tires. In order to overcome the deficiencies of approaches which are inherent to purely static mathematical models, sensor-based methods have been developed. However, the respective sensors are expensive and lead to additional effort when changing tires. Moreover, proper communication between the tire sensors and the electronics of a vehicle introduces an additional factor of complexity to the complete system. Furthermore, the sensors in the tire may have to be replaced as well when replacing the tires. This does not only lead to higher costs but also to higher waste and therefore to a higher environmental footprint.

US 2017/0001482 A1 discloses a method for making available data relating to the tires of a vehicle in which vehicle data and/or tire data is made available by a vehicle memory unit of the vehicle, wherein the vehicle data is acquired by a sensor which is arranged in the vehicle. The vehicle data and/or the tire data have information on at least one property of the tires of the vehicle. A tire-wear probability of the tires of the vehicle is acquired as a function of the vehicle data and/or tire data.

US 2018/0272813 A1 provides a tire wear estimation system on the basis of sensor data. In the disclosed system, at least one sensor is affixed to the tire to generate a first predictor. A lookup table or a database stores data for a second predictor. One of the predictors includes at least one vehicle effect. A model receives the predictors and generates an estimated wear rate for the at least one tire.

US 2019/0009618 A1 discloses a vehicle integrated expected tread-life indicator system and methods of operation thereof. In the disclosed method, data associated with one or more tread depth measurements are received. The one or more tread depth measurements were made by a measurement device external to a vehicle. The one or more tread depth measurements are descriptive of a tread depth of at least one tread of at least one tire of the vehicle. The method includes associating a respective distance value with each of the one or more tread depth measurements, and accessing a model that correlates the one or more tread depth measurements to a projected tread depth. The method includes determining an estimated distance at which the projected tread depth is expected to equal or pass a tread depth threshold based at least in part on the model. The method includes providing the estimated distance to a notification system in the vehicle.

EP 3 318 422 A1 relates to a tire wear state estimation system comprising at least one tire supporting a vehicle; a plurality of tire-mounted devices operable to supply tire-specific information affecting tire contact patch dynamics; at least one inertial measurement unit operable to supply sliding velocity information from a tire contact patch formed by the one tire rolling over a ground surface; a friction work estimator operable to calculate a friction work estimate done by the at least one tire from the tire-specific information and the sliding velocity information; and a tire wear rate estimator operable to generate a tire wear rate estimation from drawing a proportional correlation between the tire wear rate estimation and the calculated friction work estimate.

US 2020/334922 A1 relates to a device that may receive vehicle data from a vehicle telematics device or a client device. The vehicle data may include information relating to a vehicle, a vehicle component, and a sensor associated with the vehicle. The device may determine a vehicle profile, and one or more of a driving behavior and a driving location based on the vehicle data. The vehicle profile may include information relating to a condition of the vehicle component. The device may determine a wear rate for the vehicle component based on the vehicle profile, and one or more of the driving behavior or the driving location. The device may determine a service timeframe for the vehicle component based on the wear rate, the condition of the vehicle component, and a wear threshold. The device may generate a recommendation based on the service timeframe, and transmit the recommendation to the client device.

DE 10 2021101595 A1 relates to a method for determining the instantaneous tire wear rate of a wheel of a vehicle, the method comprising: calculating, for a plurality of times, the longitudinal wheel slip values for the wheel slip between a surface of the Wheel and a corresponding road surface; and determining a current tire wear rate indicator based on a set of calculated longitudinal ratchet slip values corresponding to the different times during a period of time, the current tire wear rate indicator being correlated with the instantaneous tire wear rate given during the period.

With the advent of big data and machine learning, nowadays a more robust and more versatile toolchain is available than ever before. Based on these technologies, the tire wear rate of a vehicle may be monitored with higher dimension of accuracy allowing precise predictions of the remaining tread depth, residual mileage or residual time before it is time to change a tire.

SUMMARY

The above objective is achieved by the the various computer-implemented methods and apparatus for calculating and/or monitoring the tire wear rate of a vehicle as claimed.

Further benefits and advantages of the present invention will become apparent after a careful reading of the detailed description with appropriate reference to the accompanying drawings.

BRIEF DESCRIPTION OF THE DRAWINGS

Fig. 1 illustrates a chart of an exemplary calculated tire wear of a tire of a vehicle by a self-tuning tire wear model which is based on a combination of tire information of at least one tire of a vehicle, technical data of a vehicle and at least one in-operational measurement of the tire wear, according to the present invention.

Fig. 2a illustrates, in the form of three charts, exemplary pre-stored algorithms used in the course of a process for accurately calculating tire wear, according to the present invention.

Fig. 2b illustrates, in the form of a chart of another exemplary tire wear of a vehicle, a functional aspect of the self-tuning mathematical model for increasing the accuracy of the calculated tire wear rate, according to the present invention.

Fig. 3a illustrates a further chart of an exemplary tire wear of a tire of a vehicle, for a data-driven tire wear model which is based on a combination of tire information of at least one tire of a vehicle, technical data of a vehicle and telematics information of a vehicle, according to the present invention.

Fig. 3b illustrates a further chart of an exemplary tire wear of a tire of a vehicle, for a data-driven tire wear model which is based on a combination of tire information of at least one tire of a vehicle, technical data of a vehicle, telematics information of a vehicle and of data of at least one in-operational measurement of the remaining tread depth, according to the present invention.

Fig. 4a illustrates different exemplary scenarios including load conditions and road type on which the development of the data-driven mathematical tire wear model is based, according to the present invention.

Fig. 4b illustrates the determined exemplary values for the maximum mileage per mm of tread wear (kilometers per mm) of a truck for different road types and load conditions, according to the present invention.

Fig. 4c illustrates relative differences of determined exemplary values for the maximum mileage per mm of tread wear (kilometers per mm) of a truck for different road types and load conditions, according to the present invention.

Fig. 5a illustrates an exemplary data flow between a vehicle and a cloud for calculation of the tire wear, as well as the possible reporting of the calculated tire wear, including estimated residual tread depth, remaining mileage of the tire, and/or the remaining time before change according to a configured minimum tread depth, according to the present invention.

Fig. 5b illustrates an exemplary data flow between a vehicle, a cloud and a user computing device for calculating of the tire wear, as well as the possible reporting of the calculated tire wear, including estimated residual tread depth, remaining mileage of the tire, and/or the remaining time before change according to a configured minimum tread depth, according to the present invention.

Fig. 5c illustrates an exemplary data flow between a vehicle, a cloud and a control system for calculating of the tire wear, as well as the possible reporting of the calculated tire wear, including estimated residual tread depth, remaining mileage of the tire, and/or the remaining time before change according to a configured minimum tread depth, according to the present invention.

Fig. 6 illustrates an exemplary fleet manager platform to which a calculated tire wear rate may be reported, according to the present invention.

Fig. 7 shows a flowchart illustrating a computer-implemented method 700 for calculating and/or monitoring the tire wear rate of a vehicle, according to the present invention.

Fig. 8 shows a flowchart illustrating a computer-implemented method 800 for calculating and/or monitoring the tire wear rate of a vehicle, according to the present invention.

Fig. 9 shows a flowchart illustrating a computer-implemented method 900 for calculating and/or monitoring the tire wear rate of a vehicle, according to the present invention.

Fig. 10 shows a flowchart illustrating a computer-implemented method 1000 for calculating and/or monitoring the tire wear rate of a vehicle, according to the present invention.

DETAILED DESCRIPTION

The present invention provides computer-implemented methods and apparatus for calculating the tire wear rate of a vehicle. The computer-implemented methods and apparatus according to this disclosure offer many advantages. The invention allows determining the optimum point in time for replacing the tires of a vehicle and therefore renders mobility of people as well as transportation of goods safer, greener, more reliable and more cost efficient.

Self-tuning mathematical tire wear model v. purely statistic model

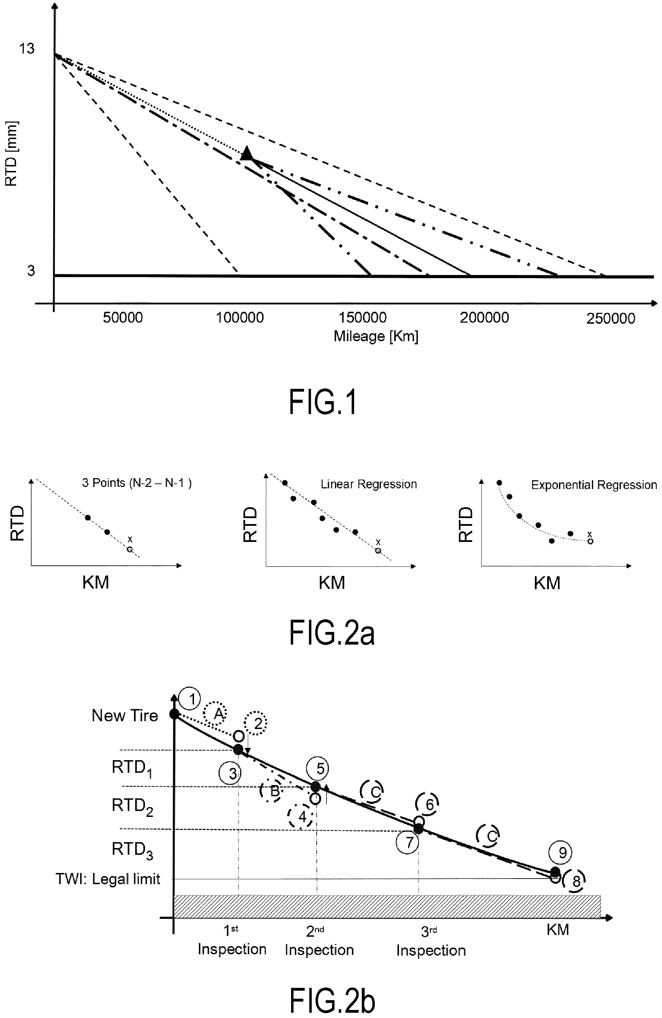

Fig. 1 illustrates a chart showing exemplary tire wear profiles of a tire of a vehicle. Along the horizontal axis, the mileage of a tire is depicted. Along the vertical axis, a tire property, such as the remaining tread depth, RTD, is indicated. At the upper left corner, the tire is in a new state, i.e., in this example the tire has a remaining tread depth of 13 mm and a mileage of 0 km. A remaining tread depth of 3 mm indicates in the present example the end of life of the tire. The dash-dotted and the dashed lines represent the estimated tire wear calculated by a purely statistic model based on tire parameters, such as tire size, tire position, etc. In this example, it is shown that by using a purely statistic model the calculated average mileage of a tire is about 180,000 kilometers (indicated by the dash-dotted line), deviating by about 80,000 kilometers in both directions leading to a statistical mileage in the range of 100,000 to 260,000 kilometers (indicated by the thin dashed lines). Thus, it is evident that the exact point in time when the minimum tread depth is reached cannot be assessed precisely.

Fig. 1 furthermore illustrates that the conventional purely statistical method can be improved upon when at a certain point in time a measurement of the remaining tread depth is taken, and the measured value is then taken into account when calculating the tire wear rate. In the example shown, an in-operational measurement at about 110,000 kilometers is performed (illustrated with a black triangle). The in-operational measurement shows that the tire wear is below average, or, in other words, that the current tire wear rate (in this case the remaining tread depth) is above average.

In order to evaluate when the end of life of the tire, i.e., a remaining tread depth of 3 mm, will be reached, a self-tuning mathematical tire wear model, according to the present invention, is applied. The self-tuning mathematical tire wear model is provided with the measured property of the tire at a particular mileage (here: the measured RTD at 110,000 kilometers), and furthermore with input data related to technical data of the tire of the vehicle, and technical data of the vehicle. By means of these data, the self-tuning mathematical model calculates the expected future tire wear, e.g. until the end of life of the tire has been reached (e.g., until a certain minimum RDT is reached, e.g. 3 mm). Thus, it may be calculated how the remaining tread depth of the tire develops with respect to the mileage. The calculated remaining tread depth of the tire is indicated by a solid black line, with the deviations indicated by dash-dot-dotted lines. As it can be seen, the average mileage of the tire in this example is about 200,000 kilometers, deviating by about only 40,000 kilometers in both directions, hence, leading to an improved statistical mileage in the range of 160,000 to 240,000 kilometers. Thus, the exact point in time when a minimum tread depth is reached can be assessed more precisely, since the deviating range was reduced by 50%.

Input data related to the technical data of a tire of the vehicle may include one or more of the tire manufacturer, the tire pattern, the tire specification, the tire size, the tire mounting position, retread information, country or region.

Input data related to the technical data of the vehicle may include one or more of the vehicle manufacturer, the vehicle chassis, vehicle usage, and/or tractor load.

Furthermore, the self-tuning mathematical model uses data of at least one in-operational measurement of at least one property of the tire as input. During the in-operational measurement, for example, the actual residual tread depth of the tire and the mileage as read from the odometer is obtained.

By performing the computer-implemented method for calculating and/or monitoring a tire wear rate of a tire of a vehicle, the technical data of the at least one tire of a vehicle as well as data of the at least one in-operational measurement of at least one property of the at least one tire of the vehicle are obtained and a tire wear rate is calculated according to the self-tuning mathematical model, based on the obtained technical data of at least one tire of the vehicle and the obtained data of at least one in-operational measurement of at least one property of the at least one tire of the vehicle.

It is noted that the afore-mentioned steps can be repeated at a further in-operational measurement after the tire has experienced further mileage (as will be illustrated in more detail later). Normally, each repetition of an in-operational measurement and a new calculation of the tire wear rate leads to higher precision as to when the tire reaches its end of life time, and thus to a more predictable planning of e.g. truck routes.

Fig. 2a illustrates an example aspect of a self-tuning mathematical model according to which a computer-implemented method for calculating and/or monitoring a tire wear rate of a vehicle may calculate a tire wear and/or tire wear rate. In one aspect, calculating a tire wear rate may take place after having obtained data of at least one in-operational measurement of a property of a tire, e.g., the residual tread depth in combination with a respective mileage as read from the odometer of the vehicle.

In one aspect, calculating the tire wear rate may comprise running multiple pre-stored algorithms. In Fig. 2a, three different charts for three different pre-stored algorithms are shown. For each of the three graphs, on the vertical axis, the remaining tread depth (RTD) and on the horizontal axis the mileage of at least one tire as read from the odometer of a vehicle (KM) is shown. The upper left corner of each graph represents a state where the tire is new, i.e., the remaining tread depth is in accordance with the technical data when a tire is sold and the mileage of the tire is zero. With increasing mileage, the remaining tread depth decreases.

The filled black dots in each of the graphs represent measurements of the remaining tread depths which are associated with an odometer state of the vehicle. For example, in the first graph previously two in-operational measurements had been taken, in the second graph previously six in-operational measurements had been taken and in the third graph previously also six in-operational measurements had been taken. The black-framed circle in each of the graphs represents, based on the previous (filled black dots) measurement dots and the algorithm applied, the calculated RTD for a particular mileage at which a further in-operational measurement is scheduled. The cross (X) in each of the graphs represents the most recent in-operational measurement of RTD at the particular mileage. To simplify the explanation, in each of the graphs the cross (X) is illustrated above the black-famed circle.

The three algorithms illustrated by the three graphs may run in parallel, and are suited to find the best algorithm for the prediction: In the present example, the first graph shows a notable offset between the calculated RTD (black-framed circle) and the measured value of RTD (cross). Applying the "3 Points" algorithm, where the two last measured values are taken for calculating RTD for the future, is thus imprecise in this case. The second graph illustrating a model of linear regression shows a smaller offset between the calculated RTD (black-framed circle) and the measured value of RTD (cross). Thus, in the present case this algorithm may be preferred over the first one, for calculating future RTD, taking the current measured value as a further measurement point for the calculation of future RTD. Finally, the third graph illustrating a model of exponential regression shows an even smaller offset between the calculated RTD (black-framed circle) and the measured value of RTD (cross). Thus, in the present case this may be the most preferred algorithm for calculating future RTD. Again, the currently measured value (black-framed circle) is taken as a further measurement point for the calculation of future RTD.

More generally, the example illustrated in Fig. 2a shows that after having obtained data from at least one measurement of the remaining tread depth which are associated with an odometer state of the vehicle, various pre-stored algorithms such as 3 points, linear regression, exponential regression, logarithmic regression or a neural network may be run. The algorithm among the pre-stored and run algorithms that produces a calculated tire wear rate (e.g., RTD) for a particular mileage which is closest to the measured value of tire wear rate (e.g., RTD) at the particular mileage is selected for calculating tire wear rate over lifetime of the tire.

The multiple algorithms may leverage on all available in-operational measurement results of a property of a tire and estimate in combination with the other input data provided to the model such as the tire manufacturer, the tire pattern, the tire specification, the tire size, the tire mounting position, retread information, the vehicle manufacturer, the vehicle chassis, vehicle usage, tractor load, country or region which of the pre-stored algorithms is most appropriate to describe the respective property of the tire during operations. In one aspect, curve fitting techniques may be applied. The algorithm yielding a result that fits best to a respective value of one or more in-operational measurements is subsequently used to extrapolate the respective tire property. Based on this extrapolation, the remaining life time of the tire may be determined. The end of life value of a tire may be defined as a tread depth of 3 mm or any other value defined by the user.

In one aspect, the pre-stored algorithms of the self-tuning mathematical model may be continuously modified, refined or replaced/updated by the respective provider.

Fig. 2b shows a graph illustrating a further aspect of the self-tuning mathematical model. On the horizontal axis, the mileage of a vehicle's tire in km and three inspections taking place at particular odometer states are indicated. On the vertical axis, the remaining tread depth is indicated in the form of discrete values for a new tire ("New Tire"). Moreover, three remaining tread depth states ("$RTD_1$", "$RTD_2$" and "$RTD_3$") when the three inspections take place and another discrete value of the remaining tread depth at the end of life of the tire (TWI, tread wear indicator) are indicated.

When the tire is new, at 1, the self-tuning model may be fed with tire data and vehicle data and the trend of the tire wear and the remaining tread depth may be calculated (illustrated with a dashed line, A). At a particular milage a first inspection is scheduled. At this mileage, the self-tuning model calculated a particular RTD (illustrated with 2). The actual in-operational measurement of the remaining tread depth that is performed at this particular mileage leads to a lower value than calculated. The respective value is indicated as "$RTD_1$", illustrated with 3. As a consequence, and as illustrated with the arrow in downward direction, the self-tuning model adjusts the prediction, and the calculated tire wear is higher than originally predicted.

Thus, in case the calculated value of a property of a tire, for example "$RTD_1$", deviates from the actually measured value of the respective property of the tire, the mathematical model corrects itself, i.e., the mathematical model is tuned. The tuning of the mathematical model comprises equalizing the calculated value for the property of the tire with the actually measured value of the respective property at the mileage where the measurement is taken. Tuning of the model may further comprise fitting the model to the latest actually measured value and at least one previously measured value of the respective property of the tire if available.

The afore-mentioned procedure may be repeated for every additional in-operational measurement of a respective property of a tire, so for the second and third inspections and the measured values "$RTD_2$" and "$RTD_3$" respectively. These values are also indicated with uneven numbers 5 and 7 (and 9 indicating TWI). The calculated values are again indicated with even numbers, here 4, 6 and 8. This allows for continuous self-tuning of the model. The more measurements are performed, the higher the accuracy and the lower the calculation error of the model will become.

In one aspect, the self-tuning mathematical model for calculating a tire wear rate may be continuously modified/improve by adapting big data approaches and/or machine learning techniques. For example, the self-tuning mathematical tire wear model may be trained on the basis of a plurality of calculated tire wear rates, wherein the plurality of calculated tire wear rates is based on data obtained from a plurality of vehicles, wherein the obtained data comprise technical data of at least one tire of each of the vehicles, technical data of each of the vehicles and data of at least one measurement of at least one property of at least one tire of each of the vehicles.

Over time, a lot of data representing a myriad of driving scenarios including lots of different vehicles under various different traffic conditions may be obtained. The respective data may create additional value by being used for continuously training the self-tuning mathematical method for calculating a tire wear rate. Based on all available data, wear patterns for particular scenarios may be determined by machine learning techniques.

In another aspect, the self-tuning mathematical model may also be modified manually. For example, in cases where it turns out that a specific tire product behaves differently under certain scenarios than expected in advance. Due the high number of inputs to the model, modifications can even be limited to certain batches of a tire model from specific manufacturing facilities. For example, it may turn out that a specific batch of a tire model which has been manufactured in a particular facility shows different performance than other batches from other facilities. In such a case, the behaviour of a single batch of tires may be considered by the model.

Another important factor which impacts the tire wear is the country in which the vehicle on which the tire to be monitored is installed is driving. While some countries are flat and have wide roads, others may be dominated by mountains in connection with narrow and curvy roads. Another country-dependent factors which influence tire wear is the climate, for example it may make a difference if in a particular country there are long summer seasons and mild winters or cold winters and short summer seasons.

Moreover, other factors such as humidity or aridity may affect the tire wear.

Tire wear may also depend on the quality of the infrastructure a country has to offer. While some countries invest lots of money in road infrastructure, others may invest less. The latter may result in damages of the road surface due to a lack of maintenance, which in turn may also contribute to reducing the life time of a tire. Another factor which may influence the lifespan of a tire may be the quality of the driver's education in a respective country. A further factor to consider may be the driving rules in the different countries. While some countries such as the Netherlands have very strict speed limits even on motorways, there are other countries such as Germany which have no speed limit on motorways. This leads to the fact that a tire may undergo completely different stress depending on the country.

Moreover, it has to be taken into consideration that the boundary conditions in various countries may be not very homogeneous. This is why the region may also be used in order to calculate the tire wear as accurately as possible. In many countries, the quality of infrastructure in the large economic centres may be different than in rural areas. Additionally or alternatively, some regions of a country may be flat, while others may be mountainous. In both cases, the way how a tire wears may be very different. Therefore, the region data may be seen as more granular than the country data.

Data driven mathematical model of tire wear - with and without **in-operational measurements**

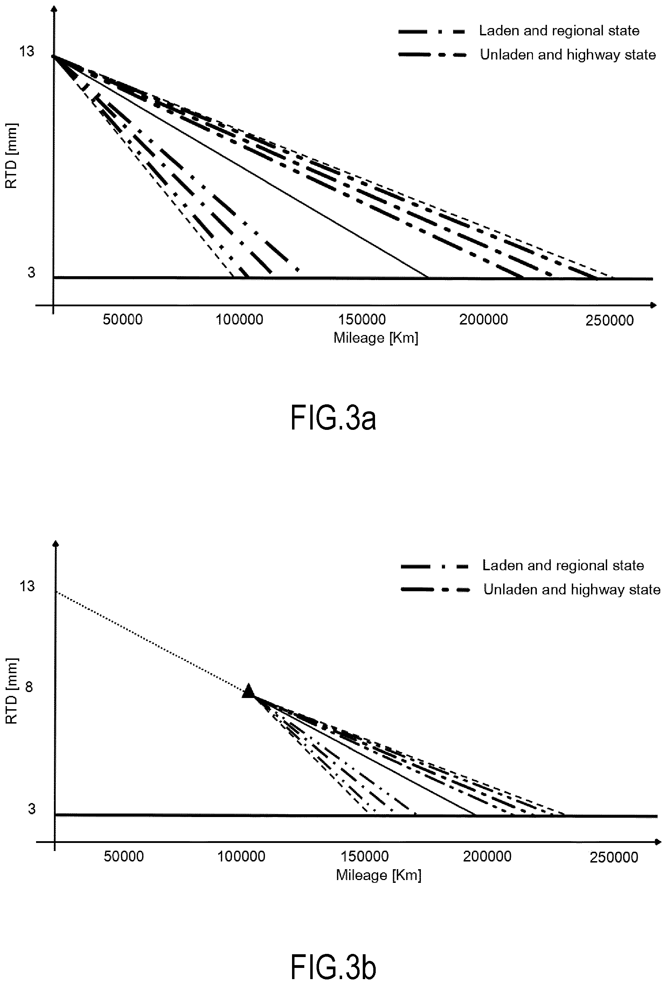

Fig. 3a and Fig. 3b show other charts of exemplary calculated tire wear profiles of a tire of a vehicle. Corresponding to Fig. 1, along the horizontal axis the mileage of a tire is depicted. Along the vertical axis, the remaining tread depth is indicated. At the upper left corner the tire is in a new state, i.e., having a mileage of 0 km and a remaining tread depth of 13 mm (in this example). When the remaining tread depth has reached a value of 3 mm (in this example), the end of life of a tire is reached.

The dashed lines represent the calculated range of the mileage of a tire made according to a purely statistical model. The two sets of dash-dotted and dash-dot-dotted lines represent prediction ranges of the mileage of the tire made according to a data-driven mathematical model taking into account telematics information of a vehicle. Among others, the telematics information of the vehicle may include data about the load of the vehicle (e.g., empty or loaded) and the way a vehicle is used (for regional or long-haul scenarios).

Telematics information of a vehicle allow calculating the tire wear rate even more precisely. For example, the tire wear may be different if a vehicle is rather used for short distances with lots of stop and go traffic or primarily for long distance travels, where in particular trucks often have a constant speed for long continuous time periods. In addition, one may consider taking into account the actual measured tire pressure as a further factor contributing to tire wear. In case the pressure is for example too low (i.e., deviating from the recommended tire pressure), the contact area between the tire and the road is increased. As a result, the tire wears faster. The information about the actual measured tire pressure is even more important in connection with the tractor load of the vehicle. As it may be known, the recommended tire pressure depends on the load of the vehicle. So, if the load of the vehicle is high, however, the measured tire pressure is in the range of the recommended tire pressure for an unloaded vehicle, the tire wear is still increased.

In general, i.e., without considering the tire pressure, load will have an influence on the tire wear. Heavily loaded vehicles therefore will undergo a higher tire wear than unloaded vehicles.

The predicted residual mileage of a tire considerably deviates with respect to load and use case of a vehicle. In case a vehicle is loaded and used for regional scenarios, the residual mileage is way lower compared to the case that a vehicle is empty and used for long haul scenarios. By taking into account telematics information of a vehicle, the prediction accuracy of the residual mileage can be clearly improved.

For example, in case that a vehicle is empty and used for long haul scenarios (cf. dash-dotted line and dash-dot-dotted lines with wide dots), the average mileage of a tire is about 235,000 kilometers (cf. dash-dotted line with wide dots), deviating by about 20,000 kilometers in both directions, leading to a statistical mileage in the range of 215,000 to 255,000 kilometers (cf. dash-dot-dotted lines with wide dots).

Similarly, in case that a vehicle is loaded and used for regional scenarios (cf. dash-dotted line and dash-dot-dotted lines with small dots), the average mileage of a tire is about 120,000 kilometers (cf. dash-dotted line with small dots), deviating by about 20,000 kilometers in both directions, leading to a statistical mileage in the range of 100,000 to 140,000 kilometers (cf. dash-dot-dotted lines with small dots).

As a result, the exact point in time or the respective mileage when a minimum tread depth is reached can be assessed more precisely, since the deviating range is reduced by 75% compared to the state of the art (e. g. a purely statistic model) and by 50% compared to using a self-tuning mathematical model without considering telematics information of a vehicle as illustrated in Fig. 1.

The telematics information of a vehicle may include at least one of the vehicle usage, tire pressure, tractor load, longitudinal acceleration, lateral acceleration, speed, GPS coordinates, odometer, type of road, load, gear shifts, engine RPMs, wheel speed, throttle/brake pedal position, tire temperature, external temperature or steering wheel angle.

As it is illustrated by Fig. 3b, in some aspects, the advantages of a data driven mathematical model may be combined with in-operational measurements, corresponding to the in-operational measurements as described for the self-tuning mathematical model. For example, the second computer-implemented method may comprise obtaining data from at least one in-operational measurement. In this case, the calculated tire wear based on the data-driven model may be improved by the mechanisms of the self-tuning model as described in connection with Fig. 2a and Fig. 2b. In case an in-operational measurement of at least one property of a tire such as the remaining tread depth is performed, the measured value of the remaining tread depth is compared with the calculated value of the tread depth, i.e., the measured value is used to correct the data-driven mathematical model. Given that the process of performing in-operational measurements and the adaptation of the model corresponds to the measurements and the adaptation for the self-tuning model, for the sake of brevity, these features are described less extensive than above. However, it should be understood that these features as described above can equally be applied here.

As it can be seen in Fig. 3b, in case that a vehicle is empty and used for long haul scenarios (cf. dash-dotted line and dashdot-dotted lines with wide dots), the average mileage of a tire is about 240,000 kilometers (cf. dash-dotted line with wide dots), deviating by about 10,000 kilometers in both directions, leading to a statistical mileage in the range of 230,000 to 250,000 kilometers (cf. dashdot-dotted lines with wide dots).

In case that a vehicle is loaded and used for regional scenarios (cf. dash-dotted line and dashdot-dotted lines with small dots), the average mileage of a tire is about 160,000 kilometers (cf. dash-dotted line with small dots), deviating by about 10,000 kilometers in both directions, leading to a statistical mileage in the range of 150,000 to 170,000 kilometers (cf. dash-dot-dotted lines with small dots).

As a result, the exact point in time or the respective mileage when a minimum tread depth is reached can be assessed even more precisely, since the deviating range was reduced by almost 90% compared to the state of the art. Moreover, the deviating range was reduced by 75% compared to the method using a self-tuning mathematical model without considering telematics information of a vehicle as illustrated in Fig. 1. Finally, by combining the advantages of the second computer-implemented method comprising a data-driven mathematical model with the advantages of obtaining data from at least one in-operational measurement, the deviating range can be further reduced by 50% compared to the case that the data-driven mathematical model is used without additional measurement data.

**Development of data driven mathematical tire wear model**

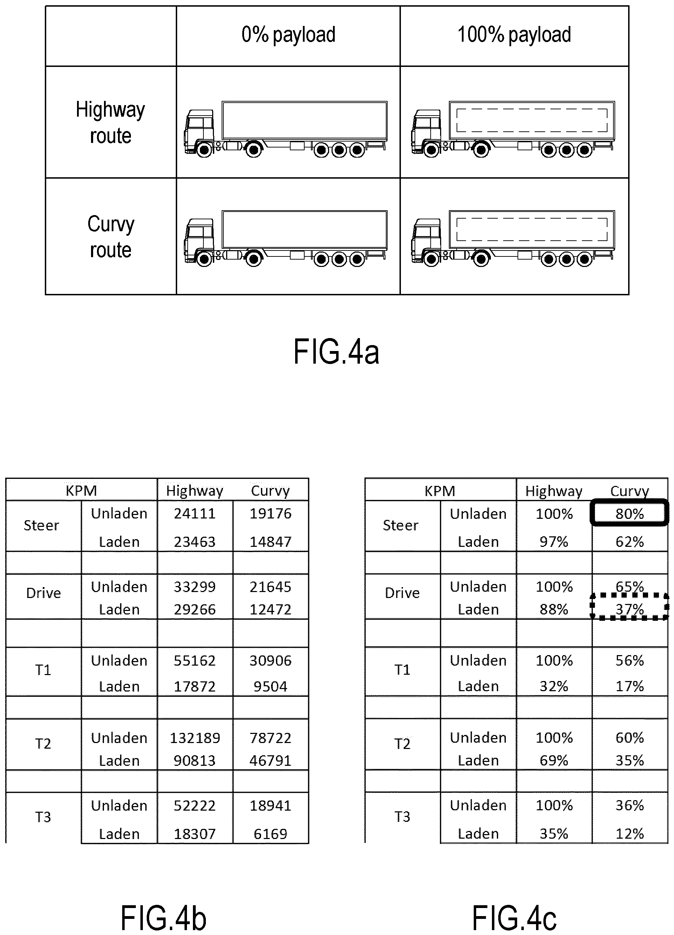

Fig. 4a illustrates different conditions on which the development of the data driven mathematical tire wear model is based. Vehicle telematics information such as speed, accelerations, gear shifts, engine RPMs, wheel speed, brake/throttle pedal position, tire temperature, external temperature or steering wheel angle may be taken into consideration play an essential role in predicting tire wear more accurately.

In a series of experiments, the respective vehicle telematics have been correlated with tire wear. The series of experiments has been performed on multiple tires focusing on the main offenders of the tire wear, which include for example load, accelerations and temperature. Load status was defined as minimum and maximum load possible so that the full load excursion has been investigated for acceleration. In a similar way, curvy and highway routes have been defined in a way to maximize the differences in terms of lateral and longitudinal accelerations.

In the frame of the series of experiments, multiple trucks have been run in parallel during summer and winter period on two different type of roads such as curvy roads and highways and the trucks had different loading conditions. In regular intervals, 3D scan based tread wear measurements have been performed for defining a 360° profile of the tires. Based on the measurements, a relationship between tire wear per km and vehicle telematics information has been extracted.

As it is shown by Fig. 4b, for different vehicle load scenarios, i.e., empty and fully loaded, the maximum mileage until reaching end of life of the tires for different road types, i.e., highway and curvy road has been determined. Based on the maximum mileage until reaching end of life of the tires for different road types, the mileage per mm tread wear of a tire has been determined. This value is also denoted as kilometers per mm (KPM). In the table shown by Fig. 4b, the KPM for various axes of a truck for different road conditions and load scenarios is shown.

Fig. 4c shows the respective percentages of the results from Fig. 4b. As it can be seen for example, in case of a curvy road, the KPM of the steer axes of an unladen truck is expected to be 80% with respect to the KPM of an unladen truck driving on a highway. On the drive axes of a curvy road, the KPM value of a laden truck is only 37% compared to an unladen truck on a highway.

A general formula obtained for the residual tread depth may be expressed as follows:

$ResidualTreadDepth = F(Mileage,\ Technical\ data\ of\ a\ tire,\ Technical\ data\ of\ the\ vehicle,\ A_x,\ A_y,\ Load,\ IP)$,

wherein $A_x$ is the longitudinal acceleration and $A_y$ is the lateral acceleration and IP is the tire (inflation) pressure.

In the data-driven mathematical tire wear model provided by this invention, among several features also the wear energy is estimated due to longitudinal accelerations. The wear energy may be calculated based on longitudinal force ($F_x$) and slip ($S_x$) where the slip is defined as the difference among wheel speed ($V_x$) and vehicle speed ($V_v$):

$$\delta WE = FxdSx = Fx(Vx - Vv)dt.$$

A respective slip ratio (SR) may be expressed by

$$SR = \frac{-Vv + Vx}{Vv}.$$

The wear energy formula then becomes

$$\delta WE = FxVv\, SR\, dt.$$

For small slip ratios (SR) it is possible to find a linear correlation among longitudinal force ($F_x$) and braking slip ratio ($B_pSR$):

$$F_x = BpSR.$$

Leveraging on this relationship it is possible to express the wear energy as

$$\delta WE = \frac{F_x^2}{B_p}V_v dt = \frac{m^2 a_x^2}{B_p}V_v dt,$$

wherein m is the mass of the respective tire of a vehicle. The above formula expresses the wear energy for a specific time interval. By integrating the above expression over a time period, it is possible to calculate the total wear energy due to longitudinal forces as

$$WE = \int \frac{m^2 a_x^2}{B_p}V_v\, dt = \frac{1}{B_p}\int m^2 a_x^2 V_v\, dt.$$

$B_p$ may change according to wear stage so the tire may be split into different wear stages and recalculate the wear energy accordingly.

A similar calculation may be performed for the wear energy due to lateral forces (with index y) considering that at small slip angle there is a linear correlation among lateral force and slip angle a:

$$\delta WE = FydSy = FyV_y dt,$$

$$\alpha = arctan\left(\frac{Vy}{V_x}\right),$$

$$\delta WE = FyVydt = FyVv\alpha dt,$$

$$F_y = c_p\, \alpha,$$

$$\delta WE = \frac{F_y^2}{c_p}V_v dt = \frac{m^2 a_y^2}{c_p}V_v dt,$$

$$WE = \int \frac{m^2 a_y^2}{c_p} V_v \, dt = \frac{1}{c_p} \int m^2 a_y^2 V_v \, dt.$$

From the data-driven experiments, residuals for the longitudinal and lateral accelerations with respect to different road and load scenarios are determined. In a further step, weighting factors ($a_1$, $b_1$, etc.) are derived from the residuals which may be used to scale the general expression for the wear energy of a tire in order to obtain the data driven wear rate based on load and accelerations as follows:

$$Steer = a_1 + b_1 * \int m_{tire}^2 a_y^2 V_v dt + c_1 * \int m_{tire}^2 a_{xneg}^2 V_v dt$$

$$Drive = a_2 + b_2 * \int m_{tire}^2 a_y^2 V_v dt + c_2 * \int m_{tire}^2 a_{xneg}^2 V_v dt + d_2 * \int m^2 a_{xposvisc}^2 V_v dt$$

$$Trailer_1 = a_3 + b_3 * \int m_{tire}^2 a_y^2 V_v dt + c_3 * \int m_{tire}^2 a_{xneg}^2 V_v dt$$

$$Trailer_2 = a_4 + b_4 * \int m_{tire}^2 a_y^2 V_v dt + c_4 * \int m_{tire}^2 a_{xneg}^2 V_v dt$$

$$Trailer_1 = a_5 + b_5 * \int m_{tire}^2 a_y^2 V_v dt + c_5 * \int m_{tire}^2 a_{xneg}^2 V_v dt$$

In the equations above $m_{tire}$ is the mass acting on a respective tire, $V_v$ is the speed of the vehicle, $a_y$ is the lateral acceleration, $a_{xneg}$ is the deceleration (negative acceleration), $a_{xposvisc}$ is the acceleration used to increase the speed (positive acceleration) considering also a component due to the air drag force.

**Calculating and reporting of tire wear rate**

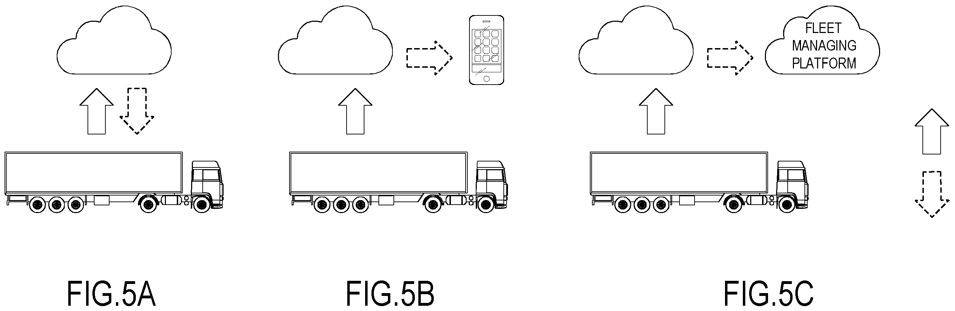

Fig. 5a, 5b and 5c illustrate different ways of how a calculated tire wear rate may be reported. The transmission of data such as technical data of a tire, technical data of a vehicle and telematics information of a vehicle are illustrated by black arrows. The black arrows may, alternatively or in addition, illustrate the transmission of the calculated tire wear rate, or in other words, the output of the applied mathematical models, in cases where the calculation is performed in the vehicle, or at a component outside the vehicle not shown in Fig. 5. In any event, the dotted arrows indicate the reporting of the calculated tire wear rate or model output.

As illustrated by Fig 5a, in one aspect, the tire wear rate may be calculated outside a vehicle, e.g., in a cloud computing environment. In this example, technical data of at least one tire of a vehicle, technical data of a vehicle and telematics information of a vehicle may be transmitted to a cloud computing device. Within the cloud computing device, the calculation of the tire wear may take place and the calculated tire wear may be reported to at least the respective vehicle.

As it is shown by Fig. 5b and 5c, in addition, or alternatively, the report may be transmitted to a user computing device such as a smartphone, a notebook, a PC or a tablet or to a fleet managing platform.

In other examples as shown by Fig. 5b and 5c, the tire wear rate may be calculated in the vehicle. In this case, the calculated tire wear may be reported from the vehicle to at least one of a user computing device or a fleet managing platform.

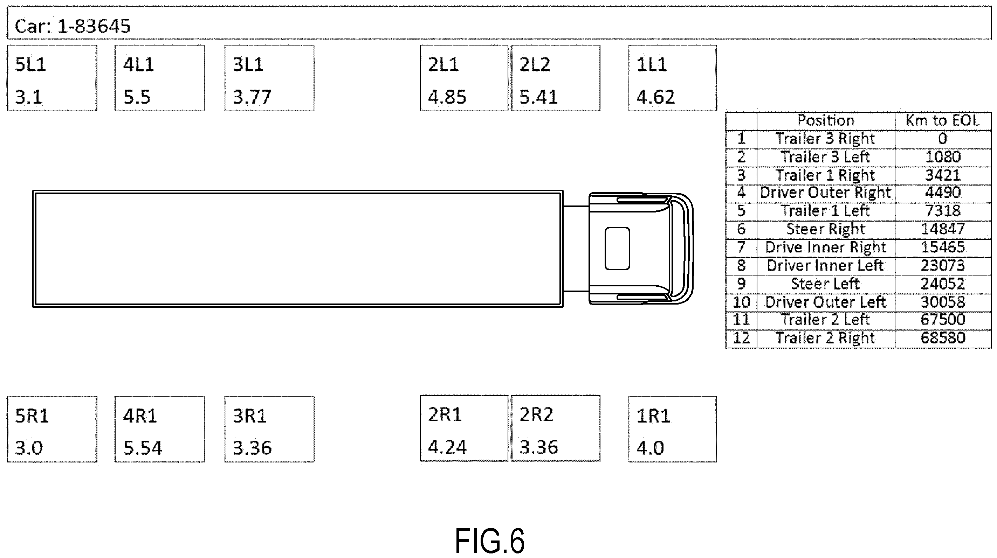

Fig. 6 shows a screenshot of an example fleet managing application which is based on the computer-implemented methods for calculating and/or monitoring a wear rate of a tire of a vehicle according to the present invention. The fleet managing platform/software may be stored and run on a cloud computing device/server. In the respective fleet managing software, there may be a digital representation of each vehicle of a fleet of at least one vehicle. The digital representation of the vehicle may comprise technical data of the vehicle such as the brand, the vehicle model, the number of axes, the used tires etc. Once a tire wear rate for a vehicle has been calculated using one of the methods according to the present invention, the calculated tire wear rate may be reported to the fleet managing application. Within the fleet managing application, the calculated tire wear rate may be associated with the digital representation of the respective vehicle. This association may be performed on a per tire basis.

As a result, the application may be capable to display the tire wear rate of each tire of a vehicle. In some aspects, the residual time or mileage of each tire of a vehicle may be displayed. Based on the displayed information, a user of the fleet managing platform may be provided with detailed information with respect to at least one of the calculated tire wear rate, the residual tread depth, the residual mileage, and the residual life time of each tire of a vehicle. If certain conditions are fulfilled, an alert message my be issued, e.g. to the driver, fleet manager, or any other user.

**Computer-implemented methods for calculating and/or monitoring the tire wear rate**

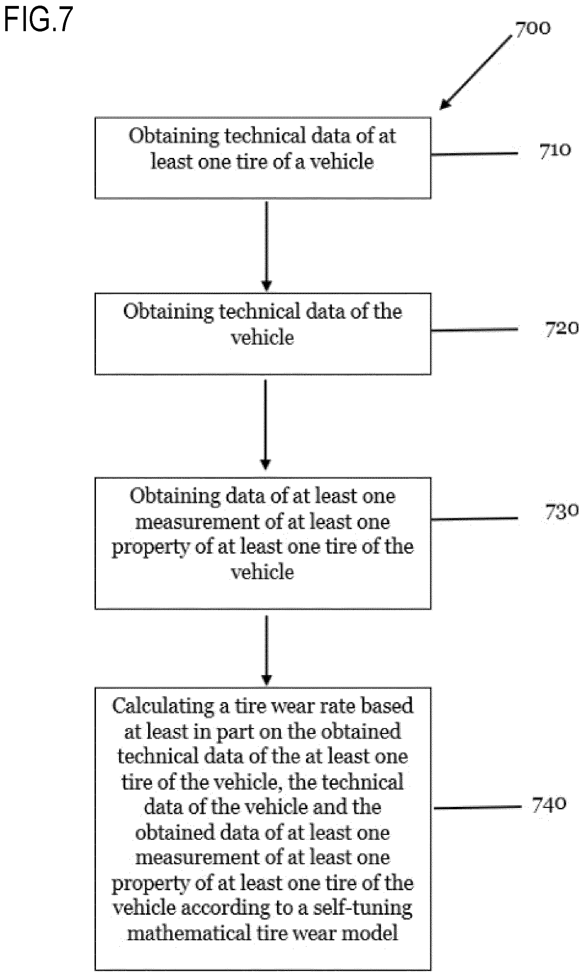

Fig. 7 shows a flowchart illustrating a computer-implemented method 900 for calculating and/or monitoring the tire wear rate of a vehicle. The operations of computer-implemented method 700 may be implemented by a computing device.

At 710, technical data of at least one tire of a vehicle are obtained.

At 720, technical data of the vehicle are obtained.

At 730, data of at least one measurement of at least one property of at least one tire of the vehicle are obtained.

At 740, a tire wear rate based at least in part on the obtained technical data of the at least one tire of the vehicle and the obtained data of at least one measurement of at least one property of at least one tire of the vehicle is calculated according to a self-tuning mathematical tire wear model.

In another aspect, calculating a tire wear rate may comprise selecting one of a plurality of pre-stored algorithms for calculating tire wear rate after performing the at least one in-operational measurement of at least one property of the at least one tire of the vehicle.

In a further aspect, selecting one of a plurality of pre-stored algorithms for calculating tire wear rate after performing the at least one in-operational measurement of at least one property of the at least one tire of the vehicle according to a self-tuning mathematical tire wear model may comprise running a plurality of pre-stored algorithms for calculating the tire wear in and choosing one algorithm of the plurality of pre-stored algorithms which yields a calculated value for the tire wear that is closest to the tire wear obtained in at least one in-operational measurement.

In a further aspect, the self-tuning model is tuned on the basis of data of at least one in-operational measurement of at least one tire of the vehicle.

In a further aspect, the self-tuning mathematical tire wear model is trained on the basis of a plurality of calculated tire wear rates, wherein the plurality of calculated tire wear rates is based on data obtained from a plurality of vehicles, wherein the obtained data comprise technical data of at least one tire of each of the vehicles, technical data of each of the vehicles and telematics information of each of the vehicles.

In a further aspect, the residual tread depth and/or the remaining mileage of the tire and/or the remaining time before change according to a configured minimum tread depth is estimated based on the calculated tire wear rate.

In a further aspect, at least one of the calculated tire wear rate, the estimated residual tread depth, the remaining mileage of the tire, and the remaining time before change according is reported to a configured minimum tread depth to a control system.

In a further aspect, the control system ins arranged in the vehicle.

In another aspect, the control system is arranged outside the vehicle, enabling collecting, from a plurality of vehicles, at least of the calculated tire wear rate, the estimated residual tread depth, the remaining mileage of the tire, and the remaining time before change according to a configured minimum tread depth.

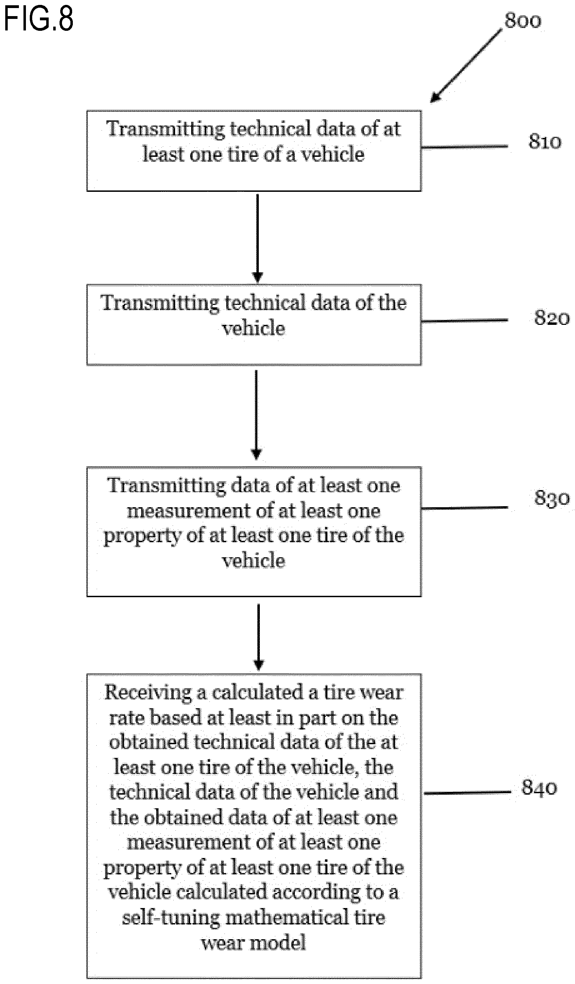

Fig. 8 shows a flowchart illustrating a computer-implemented method 800 for calculating and/or monitoring the tire wear rate of a vehicle. The operations of computer-implemented method 800 may be implemented by a computing device.

At 810, technical data of at least one tire of a vehicle are transmitted.

At 820, technical data of the vehicle are transmitted.

At 830, data of at least one measurement of at least one property of at least one tire of the vehicle is transmitted.

At 840, a calculated tire wear rate based at least in part on the transmitted technical data of the at least one tire of the vehicle and the obtained telematics information of the vehicle is obtained, wherein the calculated tire wear rate is calculated according to a self-tuning mathematical tire wear model.

In a further aspect, the residual tread depth and/or the remaining mileage of the tire and/or the remaining time before change according to a configured minimum tread depth is estimated based on the calculated tire wear rate.

In a further aspect, at least one of the calculated tire wear rate, the estimated residual tread depth, the remaining mileage of the tire, and the remaining time before change according is reported to a configured minimum tread depth to a control system.

In a further aspect, the control system ins arranged in the vehicle.

In another aspect, the control system is arranged outside the vehicle, enabling collecting, from a plurality of vehicles, at least of the calculated tire wear rate, the estimated residual tread depth, the remaining mileage of the tire, and the remaining time before change according to a configured minimum tread depth.

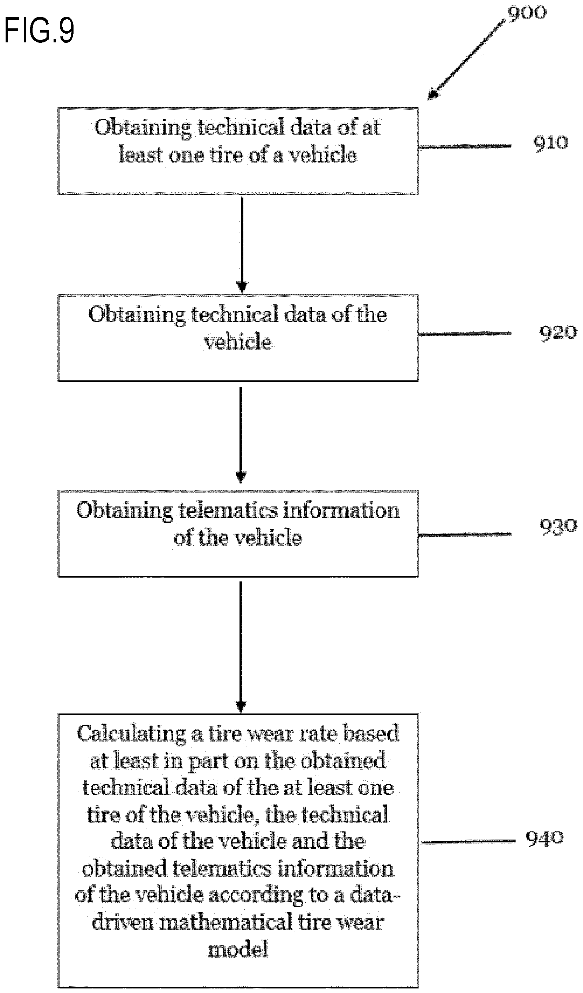

Fig. 9 shows a flowchart illustrating a computer-implemented method 900 for calculating and/or monitoring the tire wear rate of a vehicle. The operations of computer-implemented method 900 may be implemented by a computing device.

At 910, technical data of at least one tire of a vehicle are obtained.

At 920, technical data of the vehicle are obtained.

At 930, telematics information of the vehicle are obtained.

At 940, a tire wear rate based at least in part on the obtained technical data of the at least one tire of the vehicle and the obtained telematics information of the vehicle is calculated according to a data-driven mathematical tire wear model.

In a further aspect, data from at least one in-operational measurement of at least one property of the at least one tire of the vehicle may be obtained wherein calculating the tire wear rate further comprises calculating the tire wear rate based at least in part on the obtained data of the at least one in-operational measurement of the at least one property of the at least one tire of the vehicle.

In another aspect, calculating a tire wear rate based at least in part on data obtained from at least one in-operational measurement of at least one property of the at least one tire of the vehicle may comprise selecting one of a plurality of pre-stored algorithms for calculating tire wear rate after performing the at least one in-operational measurement of at least one property of the at least one tire of the vehicle.

In a further aspect, selecting one of a plurality of pre-stored algorithms for calculating tire wear rate after performing the at least one in-operational measurement of at least one property of the at least one tire of the vehicle according to an self-tuning mathematical tire wear model may comprise running a plurality of pre-stored algorithms for calculating the tire wear in and choosing one algorithm of the plurality of pre-stored algorithms which yields a calculated value for the tire wear that is closest to the tire wear obtained in at least one in-operational measurement.

In a further aspect, calculating tire wear rate further comprises calculating tire wear rate according to a self-tuning model and wherein the self-tuning model is tuned on the basis of data of at least one in-operational measurement of at least one tire of the vehicle.

In a further aspect, the data-driven mathematical tire wear model is trained on the basis of a plurality of calculated tire wear rates, wherein the plurality of calculated tire wear rates is based on data obtained from a plurality of vehicles, wherein the obtained data comprise technical data of at least one tire of each of the vehicles, technical data of each of the vehicles and telematics information of each of the vehicles.

In a further aspect, the residual tread depth and/or the remaining mileage of the tire and/or the remaining time before change according to a configured minimum tread depth is estimated based on the calculated tire wear rate.

In a further aspect, at least one of the calculated tire wear rate, the estimated residual tread depth, the remaining mileage of the tire, and the remaining time before change according is reported to a configured minimum tread depth to a control system.

In a further aspect, the control system ins arranged in the vehicle.

In another aspect, the control system is arranged outside the vehicle, enabling collecting, from a plurality of vehicles, at least of the calculated tire wear rate, the estimated residual tread depth, the remaining mileage of the tire, and the remaining time before change according to a configured minimum tread depth.

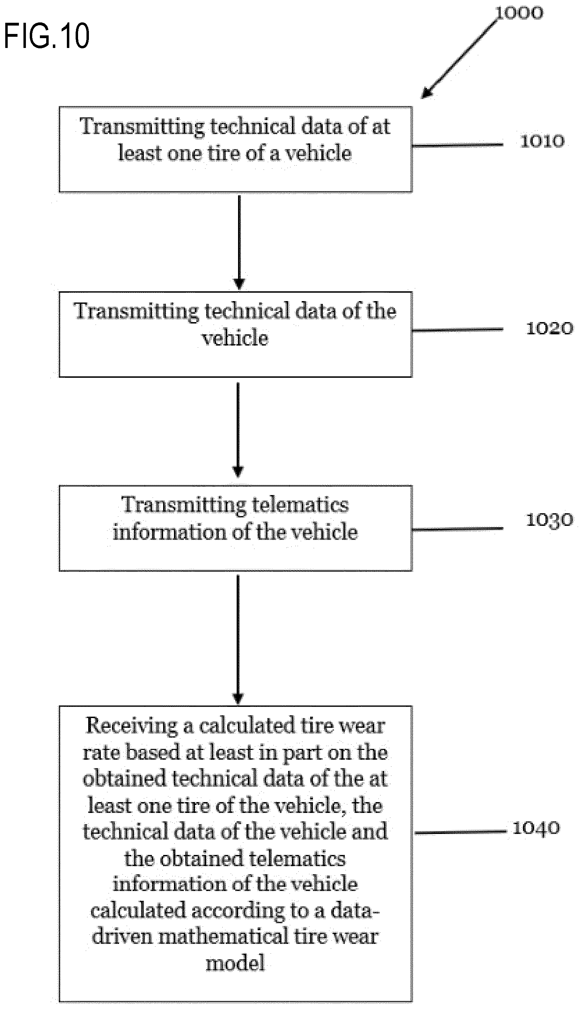

Fig. 10 shows a flowchart illustrating a computer-implemented method 1000 for calculating and/or monitoring the tire wear rate of a vehicle. The operations of computer-implemented method 1000 may be implemented by a computing device.

At 1010, technical data of at least one tire of a vehicle are transmitted.

At 1020, technical data of the vehicle are transmitted.

At 1030, telematics information of the vehicle is transmitted.

At 1040, a calculated tire wear rate based at least in part on the transmitted technical data of the at least one tire of the vehicle and the obtained telematics information of the vehicle is obtained, wherein the calculated tire wear rate is calculated according to a data-driven mathematical tire wear model.

In a further aspect, data from at least one in-operational measurement of at least one property of the at least one tire of the vehicle may be transmitted, wherein the calculated tire wear rate is further calculated based at least in part on the at least one in-operational measurement of the at least one property of the at least one tire of the vehicle.

In a further aspect, the residual tread depth and/or the remaining mileage of the tire and/or the remaining time before change according to a configured minimum tread depth is estimated based on the calculated tire wear rate.

In a further aspect, at least one of the calculated tire wear rate, the estimated residual tread depth, the remaining mileage of the tire, and the remaining time before change according is reported to a configured minimum tread depth to a control system.

In a further aspect, the control system ins arranged in the vehicle.

In another aspect, the control system is arranged outside the vehicle, enabling collecting, from a plurality of vehicles, at least of the calculated tire wear rate, the estimated residual tread depth, the remaining mileage of the tire, and the remaining time before change according to a configured minimum tread depth.

## Claims

1. A computer-implemented method (900) for calculating a tire wear rate of a vehicle, the method comprising:

   obtaining (910) technical data of at least one tire of a vehicle;
   obtaining (920) technical data of the vehicle;
   obtaining (930) telematics information of the vehicle;
   calculating (940) a tire wear rate based at least in part on the obtained technical data of the at least one tire of the vehicle, the obtained technical data of the vehicle and the obtained telematics information of the vehicle according to a data-driven mathematical tire wear model; and
   obtaining data of at least one in-operational measurement of at least one property of the at least one tire of the vehicle; wherein
   calculating the tire wear rate further comprises calculating the tire wear rate based at least in part on the obtained data of the at least one in-operational measurement of the at least one property of the at least one tire of the vehicle;
   wherein calculating a tire wear rate further comprises:

      selecting one of a plurality of pre-stored algorithms for calculating tire wear rate after obtaining data of the at least one in-operational measurement of at least one property of the at least one tire of the vehicle; and
      wherein selecting one of a plurality of pre-stored algorithms for calculating a tire wear rate comprises:

         running a plurality of algorithms for calculating the tire wear rate;
         choosing an algorithm of the plurality of algorithms which yields a calculated value for the tire wear rate that is closest to a tire wear rate based on the obtained data of the at least one in-operational measurement.

2. The method of claim 1, wherein calculating the tire wear rate further comprises: calculating tire wear rate according to a self-tuning mathematical model and wherein the self-tuning model is tuned on the basis of data of the at least one in-operational measurement of the at least one tire of the vehicle.

3. The method of claim 1 or 2, wherein the data-driven mathematical tire wear model is trained on the basis of a plurality of calculated tire wear rates, wherein the plurality of calculated tire wear rates is based on data obtained from a plurality of vehicles, wherein the obtained data comprise technical data of at least one tire of each of the vehicles, technical data of each of the vehicles and telematics information of each of the vehicles.

4. A computer-implemented method (1000) for calculating a tire wear rate of a vehicle, the method comprising:

   transmitting (1010) technical data of at least one tire of a vehicle;
   transmitting (1020) technical data of the vehicle;
   transmitting (1030) telematics information of the vehicle; and
   obtaining (1040) a calculated tire wear rate based at least in part on the transmitted technical data of the at least one tire of the vehicle, the transmitted technical data of the vehicle and the transmitted telematics information of the vehicle, wherein the calculated tire wear rate is calculated according to a data-driven mathematical tire wear model; and
   transmitting data of at least one in-operational measurement of at least one property of the at least one tire of the vehicle;
   wherein the calculated tire wear rate is further calculated based at least in part on the at least one in-operational measurement of the at least one property of the at least one tire of the vehicle;
   wherein calculating a tire wear rate further comprises:

      selecting one of a plurality of pre-stored algorithms for calculating tire wear rate after obtaining data of the at least one in-operational measurement of at least one property of the at least one tire of the vehicle; and
      wherein selecting one of a plurality of pre-stored algorithms for calculating a tire wear rate comprises:

running a plurality of algorithms for calculating the tire wear rate;

choosing an algorithm of the plurality of algorithms which yields a calculated value for the tire wear rate that is closest to a tire wear rate based on the obtained data of the at least one in-operational measurement.

5. The method according to any of claims 1 to 4, further comprising:
estimating the residual tread depth and/or the remaining mileage of the tire and/or the remaining time before change according to a configured minimum tread depth, based on the calculated tire wear rate.

6. The method of any of claims 1 to 5, further comprising:
reporting at least one of the calculated tire wear rate, the estimated residual tread depth, the remaining mileage of the tire, and the remaining time before change according to a configured minimum tread depth to a control system.

7. The method of claim 6, wherein the control system is arranged in the vehicle.

8. The method of claim 6, wherein the control system is arranged outside the vehicle, enabling collecting, from a plurality of vehicles, at least of the calculated tire wear rate, the estimated residual tread depth, the remaining mileage of the tire, and the remaining time before change according to a configured minimum tread depth.

9. The method of any of claims 1 to 8, wherein the technical data of the at least one tire of a vehicle include at least one of the tire manufacturer, the tire model, the tire pattern, the tire specification, the tire size, the tire mounting position, retread information, and batch number of the tire.

10. The method of any of claims 1 to 9, wherein performing the in-operational measurement of the at least one property of the at least one tire of the vehicle includes measuring the residual tread depth in operation, and, preferably, associating the measured residual tread depth with a status of the odometer of the vehicle.

11. The method of any of claims 1 to 10, wherein the telematics information of the vehicle include at least one of the vehicle usage, tire pressure, tractor load, region, country, longitudinal acceleration, lateral acceleration, speed, GPS coordinates, odometer, type of road, load, gear shifts, engine RPMs, wheel speed, throttle/brake pedal position, tire temperature, external temperature, steering wheel angle.

12. An apparatus for monitoring a tire wear rate of a vehicle, the method comprising:

means for obtaining technical data of at least one tire of a vehicle;
means for obtaining technical data of the vehicle;
means for obtaining telematics information of the vehicle;
means for calculating a tire wear rate based at least in part on the obtained technical data of the at least one tire of the vehicle, the obtained technical data of the vehicle and the obtained vehicle telematics information of the vehicle according to a data-driven mathematical tire wear mode; and
means for obtaining data of at least one in-operational measurement of at least one property of the at least one tire of the vehicle; wherein
calculating the tire wear rate further comprises calculating the tire wear rate based at least in part on the obtained data of the at least one in-operational measurement of the at least one property of the at least one tire of the vehicle;
wherein calculating a tire wear rate further comprises:

selecting one of a plurality of pre-stored algorithms for calculating tire wear rate after obtaining data of the at least one in-operational measurement of at least one property of the at least one tire of the vehicle; and
wherein selecting one of a plurality of pre-stored algorithms for calculating a tire wear rate comprises:

running a plurality of algorithms for calculating the tire wear rate;
choosing an algorithm of the plurality of algorithms which yields a calculated value for the tire wear rate that is closest to a tire wear rate based on the obtained data of the at least one in-operational measurement.

13. An apparatus for monitoring a tire wear rate of a vehicle, the method comprising:

means for transmitting technical data of at least one tire of a vehicle;

means for transmitting technical data of the vehicle;

means for transmitting telematics information of the vehicle; and

means for obtaining a calculated tire wear rate based at least in part on the transmitted technical data of the at least one tire of the vehicle, the transmitted technical data of the vehicle and the transmitted vehicle telematics information of the vehicle, wherein the calculated tire wear rate is calculated according to a data-driven mathematical tire wear model; and

means for transmitting data of at least one in-operational measurement of at least one property of the at least one tire of the vehicle;

wherein the calculated tire wear rate is further calculated based at least in part on the at least one in-operational measurement of the at least one property of the at least one tire of the vehicle;

wherein calculating a tire wear rate further comprises:

selecting one of a plurality of pre-stored algorithms for calculating tire wear rate after obtaining data of the at least one in-operational measurement of at least one property of the at least one tire of the vehicle; and

wherein selecting one of a plurality of pre-stored algorithms for calculating a tire wear rate comprises:

running a plurality of algorithms for calculating the tire wear rate;

choosing an algorithm of the plurality of algorithms which yields a calculated value for the tire wear rate that is closest to a tire wear rate based on the obtained data of the at least one in-operational measurement.

14. The apparatus of claim 12 configured to perform any of the methods according to any of claims 1 to 3 or 5 to 11 when dependent upon claim 1.

15. The apparatus of claim 13 configured to perform any of the methods according to any of claims 4 or claims 5 to 11 when dependent upon claim 4.


**Patentansprüche**

1. Computerimplementiertes Verfahren (900) zum Berechnen einer Reifenverschleißrate eines Fahrzeugs, das Verfahren umfassend:

Erhalten (910) von technischen Daten von mindestens einem Fahrzeugreifen;

Erhalt (920) von technischen Daten des Fahrzeugs;

Erhalten (930) von Telematikinformationen des Fahrzeugs;

Berechnen (940) einer Reifenverschleißrate basierend mindestens teilweise auf den erhaltenen technischen Daten des mindestens einen Reifens des Fahrzeugs, den erhaltenen technischen Daten des Fahrzeugs und den erhaltenen Telematikinformationen des Fahrzeugs nach einem datengesteuerten mathematischen Reifenverschleißmodell; und

Erhalten von Daten mindestens einer Betriebsmessung mindestens einer Eigenschaft des mindestens einen Reifens des Fahrzeugs; wobei

Berechnen der Reifenverschleißrate, das ferner das Berechnen der Reifenverschleißrate basierend mindestens teilweise auf den erhaltenen Daten der mindestens einen Betriebsmessung der mindestens einen Eigenschaft des mindestens einen Reifens des Fahrzeugs umfasst;

wobei das Berechnen einer Reifenverschleißrate ferner Folgendes umfasst:

Auswählen eines aus einer Vielzahl von vorgespeicherten Algorithmen zur Berechnung der Reifenverschleißrate nach Erhalt von Daten der mindestens einen Betriebsmessung von mindestens einer Eigenschaft des mindestens einen Reifens des Fahrzeugs; und

wobei das Auswählen eines aus einer Vielzahl von vorgespeicherten Algorithmen zum Berechnen einer Reifenverschleißrate Folgendes umfasst:

Ausführen einer Vielzahl von Algorithmen zum Berechnen der Reifenverschleißrate;

Auswählen eines Algorithmus aus der Vielzahl von Algorithmen, der einen berechneten Wert für die Reifenverschleißrate liefert, der einer Reifenverschleißrate basierend auf den erhaltenen Daten der mindestens einen Betriebsmessung am nächsten kommt.

**2.** Verfahren nach Anspruch 1, wobei das Berechnen der Reifenverschleißrate ferner Folgendes umfasst:
Berechnen der Reifenverschleißrate nach einem selbstabstimmenden mathematischen Modell, wobei das selbstabstimmende Modell basierend auf den Daten der mindestens einen Betriebsmessung des mindestens einen Reifens des Fahrzeugs abgestimmt wird.

**3.** Verfahren nach Anspruch 1 oder 2, wobei das datengesteuerte mathematische Reifenverschleißmodell basierend auf einer Vielzahl von berechneten Reifenverschleißraten trainiert wird, wobei die Vielzahl von berechneten Reifenverschleißraten auf Daten basiert, die von einer Vielzahl von Fahrzeugen erhalten werden, wobei die erhaltenen Daten technische Daten mindestens eines Reifens von jedem der Fahrzeuge, technische Daten von jedem der Fahrzeuge und Telematikinformationen von jedem der Fahrzeuge umfassen.

**4.** Computerimplementiertes Verfahren (1000) zum Berechnen einer Reifenverschleißrate eines Fahrzeugs, das Verfahren umfassend:

Übertragen (1010) von technischen Daten von mindestens einem Reifen eines Fahrzeugs;
Übertragen (1020) von technischen Daten des Fahrzeugs;
Übertragen (1030) von Telematikinformationen des Fahrzeugs; und
Erhalten (1040) einer berechneten Reifenverschleißrate basierend mindestens teilweise auf den übertragenen technischen Daten des mindestens einen Reifens des Fahrzeugs, den übertragenen technischen Daten des Fahrzeugs und den übertragenen Telematikinformationen des Fahrzeugs, wobei die berechnete Reifenverschleißrate nach einem datengesteuerten mathematischen Reifenverschleißmodell berechnet wird; und
Übertragen von Daten mindestens einer Betriebsmessung mindestens einer Eigenschaft des mindestens einen Reifens des Fahrzeugs;
wobei die berechnete Reifenverschleißrate ferner mindestens teilweise basierend auf der mindestens einen Betriebsmessung der mindestens einen Eigenschaft des mindestens einen Reifens des Fahrzeugs berechnet wird;
wobei das Berechnen einer Reifenverschleißrate ferner Folgendes umfasst:

Auswählen eines aus einer Vielzahl von vorgespeicherten Algorithmen zur Berechnung der Reifenverschleißrate nach Erhalt von Daten der mindestens einen Betriebsmessung von mindestens einer Eigenschaft des mindestens einen Reifens des Fahrzeugs; und
wobei das Auswählen eines aus einer Vielzahl von vorgespeicherten Algorithmen zum Berechnen einer Reifenverschleißrate Folgendes umfasst:

Ausführen einer Vielzahl von Algorithmen zum Berechnen der Reifenverschleißrate;
Auswählen eines Algorithmus aus der Vielzahl von Algorithmen, der einen berechneten Wert für die Reifenverschleißrate liefert, der einer Reifenverschleißrate basierend auf den erhaltenen Daten der mindestens einen Betriebsmessung am nächsten kommt.

**5.** Verfahren nach einem der Ansprüche 1 bis 4, ferner umfassend:
Schätzen der Restprofiltiefe und/oder der Restlaufleistung des Reifens und/oder der verbleibenden Zeit bis zum Wechsel nach einer konfigurierten Mindestprofiltiefe, basierend auf der berechneten Reifenverschleißrate.

**6.** Verfahren nach einem der Ansprüche 1 bis 5, ferner umfassend:
Melden der berechneten Reifenverschleißrate, der geschätzten Restprofiltiefe, der verbleibenden Reifenlaufleistung und der verbleibenden Zeit bis zum Wechsel nach einer konfigurierten Mindestprofiltiefe an ein Kontrollsystem.

**7.** Verfahren nach Anspruch 6, wobei das Steuersystem im Fahrzeug angeordnet ist.

**8.** Verfahren nach Anspruch 6, wobei das Steuersystem außerhalb des Fahrzeugs angeordnet ist und es ermöglicht, von einer Vielzahl von Fahrzeugen mindestens die berechnete Reifenverschleißrate, die geschätzte Restprofiltiefe, die verbleibende Reifenlaufleistung und die verbleibende Zeit bis zum Wechsel nach einer konfigurierten Mindestprofiltiefe zu erfassen.

**9.** Verfahren nach einem der Ansprüche 1 bis 8, wobei die technischen Daten des mindestens einen Reifens eines Fahrzeugs mindestens den Reifenhersteller, das Reifenmodell, das Reifenprofil, die Reifenspezifikation, die Reifengröße, die Reifenmontageposition, Runderneuerungsinformationen und die Chargennummer des Reifens einschließen.

10. Verfahren nach einem der Ansprüche 1 bis 9, wobei das Durchführen der Betriebsmessung der mindestens einen Eigenschaft des mindestens einen Reifens des Fahrzeugs das Messen der Restprofiltiefe im Betrieb einschließt und vorzugsweise das Zuordnen der gemessenen Restprofiltiefe zu einem Status des Kilometerzählers des Fahrzeugs.

11. Verfahren nach einem der Ansprüche 1 bis 10, wobei die Telematikinformationen des Fahrzeugs mindestens die Fahrzeugnutzung, den Reifendruck, die Traktorlast, die Region, das Land, die Längsbeschleunigung, die Querbeschleunigung, die Geschwindigkeit, die GPS-Koordinaten, den Kilometerzähler, den Straßentyp, die Last, die Gangschaltungen, die Motordrehzahlen, die Raddrehzahl, die Gas-/Bremspedalstellung, die Reifentemperatur, die Außentemperatur und den Lenkradwinkel einschließen.

12. Gerät zum Überwachen einer Reifenverschleißrate eines Fahrzeugs, das Verfahren umfassend:

Mittel zum Erhalten von technischen Daten von mindestens einem Fahrzeugreifen;
Mittel zum Erhalten der technischen Daten des Fahrzeugs;
Mittel zum Erhalten von Telematikinformationen des Fahrzeugs;
Mittel zum Berechnen einer Reifenverschleißrate basierend mindestens teilweise auf den erhaltenen technischen Daten des mindestens einen Reifens des Fahrzeugs, den erhaltenen technischen Daten des Fahrzeugs und den erhaltenen Fahrzeugtelematikinformationen des Fahrzeugs nach einem datengesteuerten mathematischen Reifenverschleißmodus; und
Mittel zum Erhalten von Daten mindestens einer Betriebsmessung mindestens einer Eigenschaft des mindestens einen Reifens des Fahrzeugs; wobei
Berechnen der Reifenverschleißrate, das ferner das Berechnen der Reifenverschleißrate basierend mindestens teilweise auf den erhaltenen Daten der mindestens einen Betriebsmessung der mindestens einen Eigenschaft des mindestens einen Reifens des Fahrzeugs umfasst;
wobei das Berechnen einer Reifenverschleißrate ferner Folgendes umfasst:

Auswählen eines aus einer Vielzahl von vorgespeicherten Algorithmen zur Berechnung der Reifenverschleißrate nach Erhalt von Daten der mindestens einen Betriebsmessung von mindestens einer Eigenschaft des mindestens einen Reifens des Fahrzeugs; und
wobei das Auswählen eines aus einer Vielzahl von vorgespeicherten Algorithmen zum Berechnen einer Reifenverschleißrate Folgendes umfasst:

Ausführen einer Vielzahl von Algorithmen zum Berechnen der Reifenverschleißrate;
Auswählen eines Algorithmus aus der Vielzahl von Algorithmen, der einen berechneten Wert für die Reifenverschleißrate liefert, der einer Reifenverschleißrate basierend auf den erhaltenen Daten der mindestens einen Betriebsmessung am nächsten kommt.

13. Gerät zum Überwachen einer Reifenverschleißrate eines Fahrzeugs, das Verfahren umfassend:

Mittel zum Übertragen von technischen Daten von mindestens einem Fahrzeugreifen;
Mittel zum Übertragen der technischen Daten des Fahrzeugs;
Mittel zum Übertragen von Telematikinformationen des Fahrzeugs; und
Mittel zum Erhalten einer berechneten Reifenverschleißrate basierend mindestens teilweise auf den übertragenen technischen Daten des mindestens einen Reifens des Fahrzeugs, den übertragenen technischen Daten des Fahrzeugs und den übertragenen Fahrzeugtelematikinformationen des Fahrzeugs, wobei die berechnete Reifenverschleißrate nach einem datengesteuerten mathematischen Reifenverschleißmodell berechnet wird; und
Mittel zum Übertragen von Daten mindestens einer Betriebsmessung mindestens einer Eigenschaft des mindestens einen Reifens des Fahrzeugs;
wobei die berechnete Reifenverschleißrate ferner mindestens teilweise basierend auf der mindestens einen Betriebsmessung der mindestens einen Eigenschaft des mindestens einen Reifens des Fahrzeugs berechnet wird;
wobei das Berechnen einer Reifenverschleißrate ferner Folgendes umfasst:

Auswählen eines aus einer Vielzahl von vorgespeicherten Algorithmen zur Berechnung der Reifenverschleißrate nach Erhalt von Daten der mindestens einen Betriebsmessung von mindestens einer Eigenschaft des mindestens einen Reifens des Fahrzeugs; und

wobei das Auswählen eines aus einer Vielzahl von vorgespeicherten Algorithmen zum Berechnen einer Reifenverschleißrate Folgendes umfasst:

Ausführen einer Vielzahl von Algorithmen zum Berechnen der Reifenverschleißrate;
Auswählen eines Algorithmus aus der Vielzahl von Algorithmen, der einen berechneten Wert für die Reifenverschleißrate liefert, der einer Reifenverschleißrate basierend auf den erhaltenen Daten der mindestens einen Betriebsmessung am nächsten kommt.

14. Gerät nach Anspruch 12, das so konfiguriert ist, dass es eines der Verfahren nach einem der Ansprüche 1 bis 3 oder 5 bis 11 in Abhängigkeit von Anspruch 1 durchführt.

15. Gerät nach Anspruch 13, das so konfiguriert ist, dass es eines der Verfahren nach einem der Ansprüche 4 oder nach den Ansprüchen 5 bis 11 in Abhängigkeit von Anspruch 4 durchführt.

**Revendications**

1. Procédé (900) mis en oeuvre par ordinateur destiné à calculer un taux d'usure de pneu d'un véhicule, le procédé comprenant :

l'obtention (910) de données techniques d'au moins un pneu d'un véhicule ;
l'obtention (920) de données techniques du véhicule ;
l'obtention (930) d'informations télématiques du véhicule ;
le calcul (940) d'un taux d'usure de pneu sur la base au moins en partie des données techniques obtenues de l'au moins un pneu du véhicule, des données techniques obtenues du véhicule et des informations télématiques obtenues du véhicule en fonction d'un modèle mathématique d'usure de pneu guidé par les données ; et
l'obtention de données d'au moins une mesure en fonctionnement d'au moins une propriété de l'au moins un pneu du véhicule ; dans lequel
le calcul du taux d'usure de pneu comprend en outre le calcul du taux d'usure de pneu sur la base au moins en partie des données obtenues de l'au moins une mesure en fonctionnement de l'au moins une propriété de l'au moins un pneu du véhicule ;
dans lequel le calcul d'un taux d'usure de pneu comprend en outre :

la sélection d'un parmi une pluralité d'algorithmes pré-enregistrés afin de calculer un taux d'usure de pneu après avoir obtenu des données de l'au moins une mesure en fonctionnement d'au moins une propriété de l'au moins un pneu du véhicule ; et
dans lequel la sélection d'un parmi une pluralité d'algorithmes pré-enregistrés afin de calculer un taux d'usure de pneu comprend :

l'exécution d'une pluralité d'algorithmes afin de calculer le taux d'usure de pneu ;
le choix d'un algorithme de la pluralité d'algorithmes qui produit une valeur calculée pour le taux d'usure de pneu qui est la plus proche d'un taux d'usure de pneu sur la base des données obtenues de l'au moins une mesure en fonctionnement.

2. Procédé selon la revendication 1, dans lequel le calcul du taux d'usure de pneu comprend en outre :
le calcul du taux d'usure de pneu en fonction d'un modèle mathématique d'autoréglage et dans lequel le modèle d'autoréglage est réglé sur la base des données de l'au moins une mesure en fonctionnement de l'au moins un pneu du véhicule.

3. Procédé selon la revendication 1 ou 2, dans lequel le modèle mathématique d'usure de pneu guidé par les données est formé sur la base d'une pluralité de taux d'usure de pneu calculés, dans lequel la pluralité de taux d'usure de pneu calculés sont sur la base de données obtenues à partir d'une pluralité de véhicules, dans lequel les données obtenues comprennent des données techniques d'au moins un pneu de chacun des véhicules, des données techniques de chacun des véhicules et des informations télématiques de chacun des véhicules.

4. Procédé (1000) mis en oeuvre par ordinateur destiné à calculer un taux d'usure de pneu d'un véhicule, le procédé comprenant :

la transmission (1010) de données techniques d'au moins un pneu d'un véhicule ;

la transmission (1020) de données techniques du véhicule ;

la transmission (1030) d'informations télématiques du véhicule ; et

l'obtention (1040) d'un taux d'usure de pneu calculé sur la base au moins en partie des données techniques transmises de l'au moins un pneu du véhicule, des données techniques transmises du véhicule et des informations télématiques transmises du véhicule, dans lequel le taux d'usure de pneu calculé est calculé en fonction d'un modèle mathématique d'usure de pneu guidé par les données ; et

la transmission de données d'au moins une mesure en fonctionnement d'au moins une propriété de l'au moins un pneu du véhicule ;

dans lequel le taux d'usure de pneu calculé est en outre calculé sur la base au moins en partie de l'au moins une mesure en fonctionnement de l'au moins une propriété de l'au moins un pneu du véhicule ;

dans lequel le calcul d'un taux d'usure de pneu comprend en outre :

la sélection d'un parmi une pluralité d'algorithmes pré-enregistrés afin de calculer un taux d'usure de pneu après avoir obtenu des données de l'au moins une mesure en fonctionnement d'au moins une propriété de l'au moins un pneu du véhicule ; et

dans lequel la sélection d'un parmi une pluralité d'algorithmes pré-enregistrés afin de calculer un taux d'usure de pneu comprend :

l'exécution d'une pluralité d'algorithmes afin de calculer le taux d'usure de pneu ;

le choix d'un algorithme de la pluralité d'algorithmes qui produit une valeur calculée pour le taux d'usure de pneu qui est la plus proche d'un taux d'usure de pneu sur la base des données obtenues de l'au moins une mesure en fonctionnement.

5. Procédé selon l'une quelconque des revendications 1 à 4, comprenant en outre :
l'estimation de la profondeur de sculpture résiduelle et/ou le kilométrage restant du pneu et/ou le temps restant avant le remplacement en fonction d'une profondeur de sculpture minimale configurée, sur la base du taux d'usure de pneu calculé.

6. Procédé selon l'une quelconque des revendications 1 à 5, comprenant en outre :
la communication d'au moins l'un parmi le taux d'usure de pneu calculé, la profondeur de sculpture résiduelle estimée, le kilométrage restant du pneu, et le temps restant avant le remplacement en fonction d'une profondeur de sculpture minimale configurée à un système de commande.

7. Procédé selon la revendication 6, dans lequel le système de commande est disposé dans le véhicule.

8. Procédé selon la revendication 6, dans lequel le système de commande est disposé à l'extérieur du véhicule, permettant de collecter, à partir d'une pluralité de véhicules, au moins parmi le taux d'usure de pneu calculé, la profondeur de sculpture résiduelle estimée, le kilométrage restant du pneu, et le temps restant avant le remplacement en fonction d'une profondeur de sculpture minimale configurée.

9. Procédé selon l'une quelconque des revendications 1 à 8, dans lequel les données techniques de l'au moins un pneu d'un véhicule comportent au moins l'un parmi le fabricant de pneu, le modèle de pneu, le motif de pneu, la spécification de pneu, la taille de pneu, la position de montage de pneu, les informations relatives au rechapage et le numéro de lot du pneu.

10. Procédé selon l'une quelconque des revendications 1 à 9, dans lequel la mesure en fonctionnement de l'au moins une propriété de l'au moins un pneu du véhicule comporte la mesure de la profondeur de sculpture résiduelle en fonctionnement et, de préférence, l'association de la profondeur de sculpture résiduelle mesurée à un état du compteur kilométrique du véhicule.

11. Procédé selon l'une quelconque des revendications 1 à 10, dans lequel les informations télématiques du véhicule comportent au moins l'un parmi l'utilisation du véhicule, la pression du pneu, la charge du tracteur, la région, le pays, l'accélération longitudinale, l'accélération latérale, la vitesse, les coordonnées GPS, le compteur kilométrique, le type de route, la charge, les changements de vitesse, le régime du moteur, la vitesse de roue, la position de la pédale d'accélérateur/frein, la température du pneu, la température extérieure, l'angle du volant de direction.

12. Appareil destiné à surveiller un taux d'usure de pneu d'un véhicule, le procédé comprenant :

un moyen destiné à obtenir des données techniques d'au moins un pneu d'un véhicule ;

un moyen destiné à obtenir des données techniques du véhicule ;

un moyen destiné à obtenir des informations télématiques du véhicule ;

un moyen destiné à calculer un taux d'usure de pneu sur la base au moins en partie des données techniques obtenues de l'au moins un pneu du véhicule, des données techniques obtenues du véhicule et des informations télématiques de véhicule obtenues du véhicule en fonction d'un mode mathématique d'usure de pneu guidé par les données ; et

un moyen destiné à obtenir des données d'au moins une mesure en fonctionnement d'au moins une propriété de l'au moins un pneu du véhicule ; dans lequel

le calcul du taux d'usure de pneu comprend en outre le calcul du taux d'usure de pneu sur la base au moins en partie des données obtenues de l'au moins une mesure en fonctionnement de l'au moins une propriété de l'au moins un pneu du véhicule ;

dans lequel le calcul d'un taux d'usure de pneu comprend en outre :

la sélection d'un parmi une pluralité d'algorithmes pré-enregistrés afin de calculer un taux d'usure de pneu après avoir obtenu des données de l'au moins une mesure en fonctionnement d'au moins une propriété de l'au moins un pneu du véhicule ; et

dans lequel la sélection d'un parmi une pluralité d'algorithmes pré-enregistrés afin de calculer un taux d'usure de pneu comprend :

l'exécution d'une pluralité d'algorithmes afin de calculer le taux d'usure de pneu ;

le choix d'un algorithme de la pluralité d'algorithmes qui produit une valeur calculée pour le taux d'usure de pneu qui est la plus proche d'un taux d'usure de pneu sur la base des données obtenues de l'au moins une mesure en fonctionnement.

13. Appareil destiné à surveiller un taux d'usure de pneu d'un véhicule, l'appareil comprenant :

un moyen destiné à transmettre des données techniques d'au moins un pneu d'un véhicule ;

un moyen destiné à transmettre des données techniques du véhicule ;

un moyen destiné à transmettre des informations télématiques du véhicule ; et

un moyen destiné à obtenir un taux d'usure de pneu calculé sur la base au moins en partie des données techniques transmises de l'au moins un pneu du véhicule, des données techniques transmises du véhicule et des informations télématiques de véhicule transmises du véhicule, dans lequel le taux d'usure de pneu calculé est calculé en fonction d'un modèle mathématique d'usure de pneu guidé par les données ; et

un moyen destiné à transmettre des données d'au moins une mesure en fonctionnement d'au moins une propriété de l'au moins un pneu du véhicule ;

dans lequel le taux d'usure de pneu calculé est en outre calculé sur la base au moins en partie de l'au moins une mesure en fonctionnement de l'au moins une propriété de l'au moins un pneu du véhicule ;

dans lequel le calcul d'un taux d'usure de pneu comprend en outre :

la sélection d'un parmi une pluralité d'algorithmes pré-enregistrés afin de calculer un taux d'usure de pneu après avoir obtenu des données de l'au moins une mesure en fonctionnement d'au moins une propriété de l'au moins un pneu du véhicule ; et

dans lequel la sélection d'un parmi une pluralité d'algorithmes pré-enregistrés afin de calculer un taux d'usure de pneu comprend :

l'exécution d'une pluralité d'algorithmes afin de calculer le taux d'usure de pneu ;

le choix d'un algorithme de la pluralité d'algorithmes qui produit une valeur calculée pour le taux d'usure de pneu qui est la plus proche d'un taux d'usure de pneu sur la base des données obtenues de l'au moins une mesure en fonctionnement.

14. Appareil selon la revendication 12 conçu pour exécuter l'un quelconque des procédés selon l'une quelconque des revendications 1 à 3 ou 5 à 11 lorsqu'elles dépendent de la revendication 1.

15. Appareil selon la revendication 13 conçu pour exécuter l'un quelconque des procédés selon l'une quelconque de la revendication 4 ou des revendications 5 à 11 lorsqu'elles dépendent de la revendication 4.

FIG.1

FIG.2a

FIG.2b

FIG.3a

FIG.3b

|  | 0% payload | 100% payload |
|---|---|---|
| Highway route | | |
| Curvy route | | |

**FIG.4a**

| KPM | | Highway | Curvy |
|---|---|---|---|
| Steer | Unladen | 24111 | 19176 |
| | Laden | 23463 | 14847 |
| | | | |
| Drive | Unladen | 33299 | 21645 |
| | Laden | 29266 | 12472 |
| | | | |
| T1 | Unladen | 55162 | 30906 |
| | Laden | 17872 | 9504 |
| | | | |
| T2 | Unladen | 132189 | 78722 |
| | Laden | 90813 | 46791 |
| | | | |
| T3 | Unladen | 52222 | 18941 |
| | Laden | 18307 | 6169 |

| KPM | | Highway | Curvy |
|---|---|---|---|
| Steer | Unladen | 100% | 80% |
| | Laden | 97% | 62% |
| | | | |
| Drive | Unladen | 100% | 65% |
| | Laden | 88% | 37% |
| | | | |
| T1 | Unladen | 100% | 56% |
| | Laden | 32% | 17% |
| | | | |
| T2 | Unladen | 100% | 60% |
| | Laden | 69% | 35% |
| | | | |
| T3 | Unladen | 100% | 36% |
| | Laden | 35% | 12% |

**FIG.4b**  **FIG.4c**

FIG.5A

FIG.5B

FIG.5C

Car: 1-83645

| Position | | Km to EOL |
|---|---|---|
| 1 | Trailer 3 Right | 0 |
| 2 | Trailer 3 Left | 1080 |
| 3 | Trailer 1 Right | 3421 |
| 4 | Driver Outer Right | 4490 |
| 5 | Trailer 1 Left | 7318 |
| 6 | Steer Right | 14847 |
| 7 | Drive Inner Right | 15465 |
| 8 | Driver Inner Left | 23073 |
| 9 | Steer Left | 24052 |
| 10 | Driver Outer Left | 30058 |
| 11 | Trailer 2 Left | 67500 |
| 12 | Trailer 2 Right | 68580 |

| 5L1 | 4L1 | 3L1 | 2L1 | 2L2 | 1L1 |
|---|---|---|---|---|---|
| 3.1 | 5.5 | 3.77 | 4.85 | 5.41 | 4.62 |

| 5R1 | 4R1 | 3R1 | 2R1 | 2R2 | 1R1 |
|---|---|---|---|---|---|
| 3.0 | 5.54 | 3.36 | 4.24 | 3.36 | 4.0 |

FIG.6

# FIG.7

700

```
┌─────────────────────────────┐
│  Obtaining technical data of at  │── 710
│    least one tire of a vehicle   │
└─────────────────────────────┘
                │
                ▼
┌─────────────────────────────┐
│   Obtaining technical data of the  │── 720
│            vehicle                 │
└─────────────────────────────┘
                │
                ▼
┌─────────────────────────────┐
│   Obtaining data of at least one   │── 730
│    measurement of at least one     │
│  property of at least one tire of the │
│            vehicle                 │
└─────────────────────────────┘
                │
                ▼
┌─────────────────────────────┐
│  Calculating a tire wear rate based │
│   at least in part on the obtained  │
│  technical data of the at least one │
│  tire of the vehicle, the technical │
│     data of the vehicle and the    │── 740
│    obtained data of at least one   │
│    measurement of at least one     │
│  property of at least one tire of the │
│  vehicle according to a self-tuning │
│    mathematical tire wear model    │
└─────────────────────────────┘
```

# FIG.8

Transmitting technical data of at least one tire of a vehicle — 810

Transmitting technical data of the vehicle — 820

Transmitting data of at least one measurement of at least one property of at least one tire of the vehicle — 830

Receiving a calculated a tire wear rate based at least in part on the obtained technical data of the at least one tire of the vehicle, the technical data of the vehicle and the obtained data of at least one measurement of at least one property of at least one tire of the vehicle calculated according to a self-tuning mathematical tire wear model — 840

FIG.9

900

| Obtaining technical data of at least one tire of a vehicle | — 910 |

| Obtaining technical data of the vehicle | — 920 |

| Obtaining telematics information of the vehicle | — 930 |

| Calculating a tire wear rate based at least in part on the obtained technical data of the at least one tire of the vehicle, the technical data of the vehicle and the obtained telematics information of the vehicle according to a data-driven mathematical tire wear model | — 940 |

## FIG.10

```
Transmitting technical data of at          —— 1010
least one tire of a vehicle
           |
           v
Transmitting technical data of the         —— 1020
vehicle
           |
           v
Transmitting telematics                    —— 1030
information of the vehicle
           |
           v
Receiving a calculated tire wear
rate based at least in part on the
obtained technical data of the at
least one tire of the vehicle, the
technical data of the vehicle and           —— 1040
the obtained telematics
information of the vehicle
calculated according to a data-
driven mathematical tire wear
model
```

1000

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170001482 A1
- US 20180272813 A1
- US 20190009618 A1
- EP 3318422 A1
- US 2020334922 A1
- DE 102021101595 A1